# EUROPÄISCHE PATENTANMELDUNG

(11) **EP 3 598 433 A1**
(43) Veröffentlichungstag der Anmeldung: **22.01.2020**
(21) Anmeldenummer: 19187031.0
(22) Anmeldetag: 18.07.2019
(51) Int. Cl.: G10K 11/34, G10K 9/12, B60Q 5/00, H04R 1/40

(54) **VERFAHREN ZUR VERBESSERUNG DER WAHRNEHMBARKEIT EINES SONDERSIGNALS**

(30) Priorität: 20.07.2018 DE 102018117648
(71) Anmelder: Haberl Electronic GmbH & Co. KG, 94424 Arnstorf (DE)
(72) Erfinder: Haberl, Christian, 94424 Arnstorf (DE); Dicklberger, Richard, 84385 Egglham (DE); Gschöderer, Christian, 94140 Ering (DE)
(74) Vertreter: Lichtnecker, Markus Christoph

(57) **Zusammenfassung**

Die Erfindung betrifft ein Verfahren zur Verbesserung der Wahrnehmbarkeit eines Sondersignals, insbesondere eines Einsatzfahrzeugs, bei dem ein erster Signaltreiber ein erstes Tonfolgesignal ausgibt und ein zweiter Signaltreiber ein zweites Tonfolgesignal ausgibt, wobei die Phasen der Tonfolgesignale periodisch zueinander verschoben werden.

## Beschreibung

Die Erfindung betrifft ein Verfahren zur Verbesserung der Wahrnehmbarkeit eines Sondersignals, insbesondere eines Einsatzfahrzeugs, bei dem zwei Signaltreiber jeweils ein Tonfolgesignal ausgeben.

Die Wahrnehmbarkeit eines Sondersignals von Einsatzfahrzeugen, z.B. der Feuerwehr, des Rettungsdienstes, eines Notarztes und/oder der Polizei durch am Verkehr teilnehmende Autofahrer ist nicht optimal. Frontal ist das Sondersignal zwar gut zu hören. Befindet sich der Autofahrer jedoch beispielsweise in einem Winkel zur Fahrtrichtung des Einsatzfahrzeugs, beispielsweise hinter einer Kurve oder an einer Einmündung bzw. Kreuzung, so ist das Signal oft nicht bzw. nur schlecht zu hören.

Bei dem Sondersignal kann es sich insbesondere um ein Sirenen-Signal handeln. Die Frequenz des Sondersignals ändert sich vorzugsweise kontinuierlich.

Das Sondersignal kann insbesondere elektronisch, mechanisch oder elektromechanisch, z.B. mittels Druckluft, erzeugt werden.

Typische Sondersignale umfassen die Einstellungen Landhorn oder Stadthorn sowie das Wail-Signal, das Yelp-Signal und das High-Low-Signal.

Die Tonhöhe bei den Einstellungen Landhorn oder Stadthorn liegt insbesondere zwischen 360 Hz und 630 Hz. Das Tonintervall ist vorzugsweise eine reine Quarte.

Meist werden zwei Signaltreiber eingesetzt. Diese werden gleichphasig angesteuert. Es kann daher aufgrund von Reflektionen zu Auslöschungen bzw. zu Schalldruckverminderungen an unterschiedlichen Positionen relativ zum Einsatzfahrzeug kommen.

Es ist daher eine Aufgabe der Erfindung, ein Verfahren sowie ein System zu schaffen, wodurch die Wahrnehmbarkeit eines Sondersignals verbessert wird.

Die Lösung dieser Aufgabe erfolgt durch das Verfahren sowie das System der unabhängigen Ansprüche.

Erfindungsgemäß gibt ein erster Signaltreiber, welcher als Schalltreiber ausgebildet sein kann, ein erstes Tonfolgesignal aus. Ein zweiter Signaltreiber, welcher als Schalltreiber ausgebildet sein kann, gibt ein zweites Tonfolgesignal aus, wobei die Phasen der Tonfolgesignale periodisch zueinander verschoben werden. Dadurch wird insbesondere die Klangfolge optimiert.

Bei dem Signaltreiber kann es sich insbesondere um einen Lautsprecher handeln. Beispielsweise kann ein erster Lautsprecher ein erstes Tonfolgesignal ausgeben, während ein zweiter Lautsprecher ein zweites Tonfolgesignal ausgibt.

Es ist auch möglich, dass ein Lautsprecher mehrere, z.B. zwei, Signaltreiber umfasst.

Insbesondere ist die Frequenz und/oder die Tonfolge der beiden Tonfolgesignale gleich. Gleichwohl ist es auch möglich, dass die beiden Tonfolgesignale jeweils eine unterschiedliche Frequenz und/oder Tonfolge aufweisen.

Die Tonfolgesignale unterscheiden sich in ihren Phasen, haben also insbesondere unterschiedliche Phasenlagen. Die Tonfolgesignale sind nicht gleichphasig, d.h. die Nulldurchgänge sind unterschiedlich. Dies kann beispielsweise dadurch erreicht werden, dass die Tonfolgesignale zu unterschiedlichen Zeiten gestartet werden.

Erfindungsgemäß werden die Phasen periodisch zueinander verschoben. Der Phasenversatz wird vorzugsweise stetig verändert. Insbesondere wird der Nulldurchgang eines Tonfolgesignals, vorzugsweise beider Tonfolgesignale, periodisch verschoben.

Das erste Tonfolgesignal wird insbesondere über einen ersten Signalpfad bzw. ersten Lautsprecherkanal und das zweite Tonfolgesignal über einen zweiten Signalpfad bzw. zweiten Lautsprecherkanal erzeugt und/oder ausgegeben.

Die Signalpfade sind insbesondere unabhängig voneinander.

Vorzugsweise umfasst der erste Signalpfad eine erste Signalquelle, einen ersten Verstärker und einen ersten Signaltreiber.

Der zweite Signalpfad umfasst insbesondere eine zweite Signalquelle, einen zweiten Verstärker und einen zweiten Signaltreiber.

Als Signaltreiber kann beispielsweise ein Lautsprecher, insbesondere Druckkammerlautsprecher, verwendet werden. Grundsätzlich sind beliebige Schallwandler denkbar.

Dadurch, dass die Phasen der Tonfolgesignale periodisch zueinander verschoben werden, verbessert sich das Raumstrahlverhalten deutlich. So ergibt sich insbesondere an jedem räumlichen Punkt um das Einsatzfahrzeug eine Überhöhung des Schallpegels. Daraus resultiert eine bessere Wahrnehmung durch die Verkehrsteilnehmer, beispielsweise auch an Kreuzungen.

An jedem räumlichen Punkt im Bereich des Einsatzfahrzeugs entstehen stets Maxima und Minima der Tonfolgesignale, wobei die Maxima deutlich von den Verkehrsteilnehmern wahrgenommen werden.

Die Wahrnehmbarkeit eines Sondersignals wird somit insgesamt verbessert.

Weiterbildungen der Erfindung sind auch den abhängigen Ansprüchen, der Beschreibung sowie den beigefügten Zeichnungen zu entnehmen.

Gemäß einer Ausführungsform werden die Phasen der Tonfolgesignale durch eine Phasenjittermodulation zueinander verschoben.

Ein derartiges Modulationsverfahren basiert auf dem Phasenrauschen. Grundsätzlich sind auch andere Modulationsverfahren denkbar, z.B. Analog Spectrum Modulation oder Digital Spectrum Modulation.

Nach einer weiteren Ausführungsform wird die Phasenjittermodulation durch eine Frequenzschwebung generiert.

Bei einer Frequenzschwebung weist die Resultierende der Superposition, also der Überlagerung, zweier Schwingungen eine periodisch zu- bzw. abnehmende Amplitude auf.

Die Tonfolgesignale werden über zwei separate Signalpfade ausgegeben. Insbesondere können die beiden Signalpfade einen Frequenzversatz von 1 Hz bis maximal 8 Hz aufweisen.

Gemäß einer weiteren Ausführungsform werden die Phasen periodisch bei einer Frequenz zwischen 1 Hz und 24 Hz, insbesondere zwischen 1 Hz und 8 Hz, verschoben. Beispielsweise können die Phasen periodisch bei 8 Hz verschoben werden. Der Phasenversatz ändert sich somit periodisch. Insbesondere folgt der Phasenversatz der Frequenz.

Nach einer weiteren Ausführungsform gibt ein dritter Signaltreiber, welcher als Schalltreiber ausgebildet sein kann, ein drittes Tonfolgesignal aus, das gleichphasig mit dem erstes Tonfolgesignal ist.

Ein vierter Signaltreiber, welcher als Schalltreiber ausgebildet sein kann, gibt ein viertes Tonfolgesignal aus, das gleichphasig mit dem zweiten Tonfolgesignal ist.

Die Tonfolgesignale sind somit jeweils paarweise in Phase. Die Paare werden dann zueinander in ihrer Phase verschoben.

Insgesamt sind dabei vier Schallwandler verbaut. Dadurch kann die Leistung verdoppelt werden. Beispielsweise kann eine Erhöhung der Lautstärke um etwa 6 Dezibel erreicht werden. So kann insbesondere eine elektronische Alternative zu Kompressoranlagen, z.B. Martin-Anlagen, mit gleichen Leistungsmerkmalen geschaffen werden.

Grundsätzlich sind auch mehr als vier Signaltreiber bzw. Schalltreiber denkbar, beispielsweise sechs, acht, zehn oder mehr. Die Hälfte der Signaltreiber kann insbesondere jeweils in Phase sein. Die Phase kann zur anderen Hälfte der Signaltreiber verschoben werden.

Die Erfindung betrifft auch ein System zur Verbesserung der Wahrnehmbarkeit eines Sondersignals, insbesondere eines Einsatzfahrzeugs.

Bei dem Einsatzfahrzeug kann es sich z.B. um ein Feuerwehrauto, einen Rettungswagen, ein Notarztfahrzeug und/oder ein Polizeiauto handeln.

Insbesondere betrifft die Erfindung auch ein Einsatzfahrzeug mit einem entsprechenden System zur Verbesserung der Wahrnehmbarkeit eines Sondersignals.

Daneben betrifft die Erfindung die Verwendung eines entsprechenden Systems zur Verbesserung der Wahrnehmbarkeit eines Sondersignals.

Das System weist einen ersten Signaltreiber auf, der dazu ausgebildet ist, ein erstes Tonfolgesignal auszugeben. Ferner weist das System einen zweiten Signaltreiber auf, der dazu ausgebildet ist, ein zweites Tonfolgesignal auszugeben.

Es ist eine Steuerungsvorrichtung vorgesehen, die dazu ausgebildet ist, die Phasen der Tonfolgesignale periodisch zueinander zu verschieben.

Die Steuerungsvorrichtung steuert vorzugsweise beide Signalpfade.

Gemäß einer Ausführungsform ist dem ersten Signaltreiber eine erste Signalquelle und/oder ein erster Verstärker zugeordnet. Diese Bauteile können einen ersten Signalpfad bilden.

Nach einer weiteren Ausführungsform ist dem zweiten Signaltreiber eine zweite Signalquelle und/oder ein zweiter Verstärker zugeordnet. Diese Bauteile können einen zweiten Signalpfad bilden. Der zweite Signalpfad ist vorzugsweise unabhängig vom ersten Signalpfad.

Gemäß einer weiteren Ausführungsform ist ein dritter Signaltreiber vorgesehen, der dazu ausgebildet ist, ein drittes Tonfolgesignal auszugeben. Dem dritten Signaltreiber kann insbesondere eine dritte Signalquelle und/oder ein dritter Verstärker zugeordnet sein. Diese Bauteile können einen dritten Signalpfad bilden.

Vorzugsweise gibt der dritte Signaltreiber ein drittes Tonfolgesignal aus, das gleichphasig mit dem erstes Tonfolgesignal ist.

Nach einer weiteren Ausführungsform ist ein vierter Signaltreiber vorgesehen, der dazu ausgebildet ist, ein viertes Tonfolgesignal auszugeben. Dem vierten Signaltreiber kann insbesondere eine vierte Signalquelle und/oder ein vierter Verstärker zugeordnet sein. Diese Bauteile können einen vierten Signalpfad bilden.

Vorzugsweise gibt der vierte Signaltreiber ein viertes Tonfolgesignal aus, das gleichphasig mit dem zweiten Tonfolgesignal ist.

Es können somit z.B. zwei oder mehr weitere Signalpfade vorgesehen sein. Beispielsweise kann das System insgesamt vier Schallwandler aufweisen.

Durch die zusätzlichen Schallwandler kann das Sondersignal deutlich verstärkt werden.

Alle hier beschriebenen Ausführungsformen und Bauteile des Systems sind insbesondere dazu ausgebildet, z.B. mittels einer Steuerungsvorrichtung, nach dem hier beschriebenen Verfahren betrieben zu werden. Ferner können alle hier beschriebenen Ausführungsformen des Systems sowie alle hier beschriebenen Ausführungsformen des Verfahrens jeweils miteinander kombiniert werden, insbesondere auch losgelöst von der konkreten Ausgestaltung, in deren Zusammenhang sie erwähnt werden.

Die Erfindung wird im Folgenden beispielhaft unter Bezugnahme auf die Zeichnungen beschrieben. Es zeigen:
- Fig. 1: eine Schemadarstellung einer ersten Ausführungsform eines erfindungsgemäßen Systems, und
- Fig. 2: eine Schemadarstellung einer zweiten Ausführungsform eines erfindungsgemäßen Systems,

Zunächst ist zu bemerken, dass die dargestellten Ausführungsformen rein beispielhafter Natur sind. So können einzelne Merkmale nicht nur in der gezeigten Kombination, sondern auch in Alleinstellung oder in anderen technisch sinnvollen Kombinationen realisiert sein. Beispielsweise können die Merkmale einer Ausführungsform beliebig mit Merkmalen einer anderen Ausführungsform kombiniert werden.

Enthält eine Figur ein Bezugszeichen, welches im unmittelbar zugehörigen Beschreibungstext nicht erläutert wird, so wird auf die entsprechenden vorhergehenden bzw. nachfolgenden Ausführungen in der Figurenbeschreibung Bezug genommen. So werden für gleiche bzw. vergleichbare Bauteile in den Figuren dieselben Bezugszeichen verwendet und diese nicht nochmals erläutert.

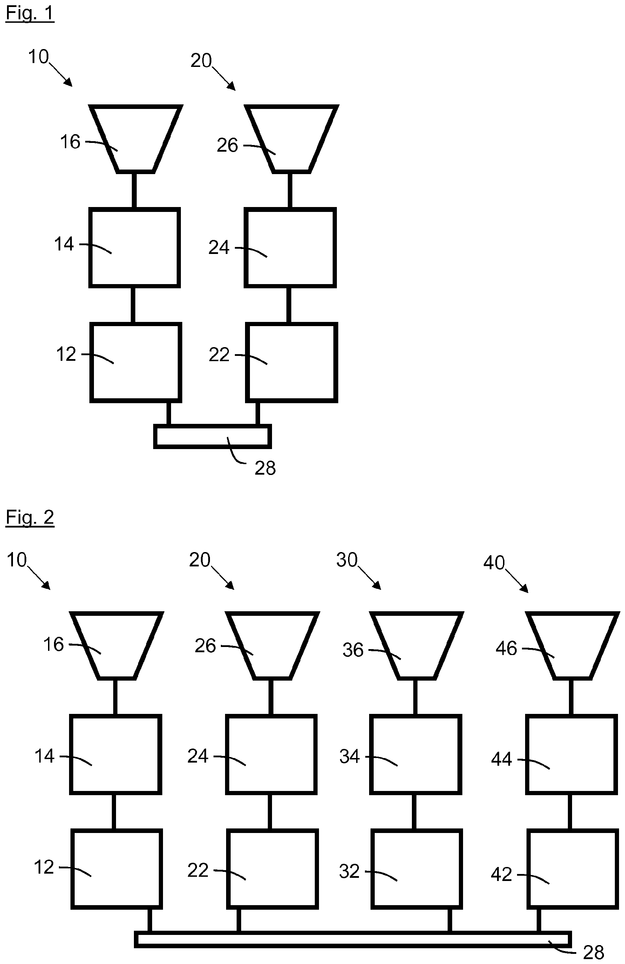

Fig. 1 zeigt ein System zur Verbesserung der Wahrnehmbarkeit eines Sondersignals mit einem ersten Signalpfad 10.

Der erste Signalpfad 10 umfasst eine erste Signalquelle 12, einen ersten Verstärker 14 und einen ersten, als Lautsprecher ausgebildeten Signaltreiber 16.

Das System weist ferner einen zweiten Signalpfad 20 auf. Der zweite Signalpfad 20 umfasst eine zweite Signalquelle 22, einen zweiten Verstärker 24 und einen zweiten, als Lautsprecher ausgebildeten Signaltreiber 26.

Der erste Signaltreiber 16 kann ein erstes Tonfolgesignal ausgeben, während der zweite Signaltreiber 26 ein zweites Tonfolgesignal ausgeben kann.

Eine Steuerungsvorrichtung 28 steht mit dem ersten Signalpfad 10 und dem zweiten Signalpfad 20 in Kontakt. Mit der Steuerungsvorrichtung 28 können die Phasen der Tonfolgesignale periodisch zueinander verschoben werden.

Durch den sich kontinuierlich ändernden Phasenversatz wird das Rundstrahlverhalten verbessert, da sich die Signale nicht gegenseitig auslöschen.

Es kann auch, wie in Fig. 2 gezeigt ist, zusätzlich ein dritter Signalpfad 30 vorgesehen sein. Der dritte Signalpfad 30 umfasst eine dritte Signalquelle 32, einen dritten Verstärker 34 und einen dritten, als Lautsprecher ausgebildeten Signaltreiber 36.

Daneben ist ein vierter Signalpfad 40 vorgesehen. Der vierte Signalpfad 40 umfasst eine vierte Signalquelle 42, einen vierten Verstärker 44 und einen vierten, als Lautsprecher ausgebildeten Signaltreiber 46.

Der dritte Signaltreiber 36 kann ein drittes Tonfolgesignal ausgeben, während der vierte Signaltreiber 46 ein viertes Tonfolgesignal ausgeben kann.

Eine Steuerungsvorrichtung 28 steht mit dem ersten Signalpfad 10, dem zweiten Signalpfad 20, dem dritten Signalpfad 30 und dem vierten Signalpfad 40 in Kontakt.

Mit der Steuerungsvorrichtung 28 können z.B. das erste Tonfolgesignal und das dritte Tonfolgesignal in Phase geschaltet werden und ein erstes Tonfolgesignalpaar bilden.

Auch das zweite Tonfolgesignal und das vierte Tonfolgesignal können in Phase geschaltet werden und ein zweites Tonfolgesignalpaar bilden.

Die Phasen des ersten Tonfolgesignalpaars und des zweiten Tonfolgesignalpaars können durch die Steuerungsvorrichtung 28 periodisch zueinander verschoben werden.

Die Leistung wird durch die Verdopplung der Signaltreiberanzahl erheblich gesteigert. So kann z.B. eine Erhöhung der Lautstärke um etwa 6 Dezibel erreicht werden.

### Bezugszeichenliste

- 10: erster Signalpfad
- 12: erste Signalquelle
- 14: erster Verstärker
- 16: erster Lautsprecher, erster Signaltreiber
- 20: zweiter Signalpfad
- 22: zweite Signalquelle
- 24: zweiter Verstärker
- 26: zweiter Lautsprecher, zweiter Signaltreiber
- 28: Steuerungsvorrichtung
- 30: dritter Signalpfad
- 32: dritte Signalquelle
- 34: dritter Verstärker
- 36: dritter Lautsprecher, dritter Signaltreiber
- 40: vierter Signalpfad
- 42: vierte Signalquelle
- 44: vierter Verstärker
- 46: vierter Lautsprecher, vierter Signaltreiber

## Patentansprüche

1. Verfahren zur Verbesserung der Wahrnehmbarkeit eines Sondersignals, insbesondere eines Einsatzfahrzeugs, bei dem
ein erster Signaltreiber (16) ein erstes Tonfolgesignal ausgibt, und
ein zweiter Signaltreiber (26) ein zweites Tonfolgesignal ausgibt, wobei die Phasen der Tonfolgesignale periodisch zueinander verschoben werden.

2. Verfahren nach Anspruch 1,
**dadurch gekennzeichnet,**
**dass** die Phasen der Tonfolgesignale durch eine Phasenjittermodulation zueinander verschoben werden.

3. Verfahren nach Anspruch 1 oder 2,
**dadurch gekennzeichnet,**
**dass** die Phasenjittermodulation durch eine Frequenzschwebung generiert wird.

4. Verfahren nach einem der vorhergehenden Ansprüche,
**dadurch gekennzeichnet,**
**dass** die Phasen periodisch bei einer Frequenz zwischen 1 Hz und 24 Hz, insbesondere zwischen 1 Hz und 8 Hz, verschoben werden.

5. Verfahren nach einem der vorhergehenden Ansprüche,
**dadurch gekennzeichnet,**
**dass** ein dritter Signaltreiber (36) ein drittes Tonfolgesignal ausgibt, das gleichphasig mit dem erstes Tonfolgesignal ist, und ein vierter Signaltreiber (46) ein viertes Tonfolgesignal ausgibt, das gleichphasig mit dem zweiten Tonfolgesignal ist.

6. System zur Verbesserung der Wahrnehmbarkeit eines Sondersignals, insbesondere eines Einsatzfahrzeugs, umfassend
einen ersten Signaltreiber (16), der dazu ausgebildet ist, ein erstes Tonfolgesignal auszugeben,
einen zweiten Signaltreiber (26), der dazu ausgebildet ist, ein zweites Tonfolgesignal auszugeben, und
eine Steuerungsvorrichtung (28), die dazu ausgebildet ist, die Phasen der Tonfolgesignale periodisch zueinander zu verschieben.

7. System nach Anspruch 6,
**dadurch gekennzeichnet,**
**dass** dem ersten Signaltreiber (16) eine erste Signalquelle (12) und/oder ein erster Verstärker (14) zugeordnet ist.

8. System nach Anspruch 6 oder 7,
**dadurch gekennzeichnet,**
**dass** dem zweiten Signaltreiber (26) eine zweite Signalquelle (22) und/oder ein zweiter Verstärker (24) zugeordnet ist.

9. System nach einem der Ansprüche 6 bis 8,
**dadurch gekennzeichnet,**
**dass** ein dritter Signaltreiber (36) vorgesehen ist, der dazu ausgebildet ist, ein drittes Tonfolgesignal auszugeben.

10. System nach einem der Ansprüche 6 bis 9,
**dadurch gekennzeichnet,**
**dass** ein vierter Signaltreiber (46) vorgesehen ist, der dazu ausgebildet ist, ein viertes Tonfolgesignal auszugeben.

11. System nach einem der Ansprüche 6 bis 10,
**dadurch gekennzeichnet,**
**dass** die Signaltreiber (16, 26, 36, 46) als Lautsprecher ausgebildet sind.

12. System nach einem der Ansprüche 6 bis 10,
**dadurch gekennzeichnet,**
**dass** ein Lautsprecher vorgesehen ist, welcher zumindest zwei Signaltreiber aufweist.
